Europäisches Patentamt

European Patent Office

Office européen des brevets

(19)

(11) Veröffentlichungsnummer : **0 340 556 B1**

# (12) EUROPÄISCHE PATENTSCHRIFT

(45) Veröffentlichungstag der Patentschrift :
**27.12.95 Patentblatt 95/52**

(51) Int. Cl.⁶ : **G02B 6/18**

(21) Anmeldenummer : **89107181.3**

(22) Anmeldetag : **21.04.89**

(54) **Verfahren zur Herstellung eines Lichtwellenleiters**

(30) Priorität : **28.04.88 DE 3814298**

(43) Veröffentlichungstag der Anmeldung :
**08.11.89 Patentblatt 89/45**

(45) Bekanntmachung des Hinweises auf die
Patenterteilung :
**27.12.95 Patentblatt 95/52**

(84) Benannte Vertragsstaaten :
**DE FR GB IT**

(56) Entgegenhaltungen :
**EP-A- 0 145 378**
**EP-A- 0 171 294**
**EP-A- 0 246 552**
**US-A- 4 564 263**

(56) Entgegenhaltungen :
**US-A- 4 568 146**
**DATABASE WPIL, Nr. 86-086147 [13], Derwent**
**Publications Ltd, London, GB & JP-A-61 034**
**503**

(73) Patentinhaber : **HOECHST**
**AKTIENGESELLSCHAFT**
**D-65926 Frankfurt am Main (DE)**

(72) Erfinder : **Herbrechtsmeier, Peter, Dr.**
**Friedrich-Stolze-Strasse 10**
**D-6240 Königstein/Taunus (DE)**
Erfinder : **Theis, Jürgen, Dr.**
**Am Tiergarten 40**
**D-6000 Frankfurt am Main (DE)**
Erfinder : **Wieners, Gerhard, Dr.**
**Glauburgstrasse 87**
**D-6000 Frankfurt am Main (DE)**

EP 0 340 556 B1

# Beschreibung

Die Erfindung bezieht sich auf ein Verfahren zur Herstellung von Lichtwellenleitern (LWL), welche sich für die Übertragung von Licht, beispielsweise von Lichtsignalen für die Datenübertragung, eignen.

Die Lichtwellenleiter bestehen aus einem Kern und einem Mantel, die beide aus (unterschiedlichen) transparenten Materialien bestehen, wobei das Kernmaterial immer einen um mindestens ein Prozent höheren Brechungsindex aufweist als das Mantelmaterial. Der Lichtwellenleiter ist im Allgemeinen fadenförmig und weist einen kreisförmigen Querschnitt auf. Ein Mantelmaterial ist mit ringförmigen Querschnitt in einer dünnen Schicht auf den fadenförmigen Kern aufgetragen.

Die bisher für Lichtwellenleiter am häufigsten eingesetzten Materialien sind Homo- und Copolymere von Methacrylsäureestern im Kern und Homo- und Copolymere von Methacrylsäureestern fluorhaltiger Alkohole oder Copolymere des Vinylidenfluorids mit anderen fluorhaltigen Monomeren im Mantel.

Bekannt ist, daß fluorhaltige Polymere, die im Wesentlichen aus Vinylidenfluorid (VdF), Tetrafluorethylen (TFE) und/oder Hexafluorpropen (HFP) bestehen, als Mantelmaterialien für Lichtwellenleiter eingesetzt wurden, die als Kernmaterial Homo- und Copolymere aus Methylmethacrylat (MMA), Styrol und Methacrylsäureestern aliphatischer Alkohole enthalten (EP-A 154 339, EP-A 97 325, DE-A 24 55 265). Die fluorhaltigen Mantelmaterialien neigen dazu, sich durch Kristallisation der VdF- und TFE-Anteile zu trüben. Andererseits können solche Polymere, besonders solche mit hohen HFP-Anteilen, klebrig und damit ungeeignet als LWL-Mantelmaterial sein oder sie haften schlecht auf dem Kernmaterial, insbesondere wenn der VdF-Anteil niedrig gewählt wurde. Copolymere mit hohen TFE-Anteilen lassen sich schlecht thermoplastisch zu einem LWL-Mantel verarbeiten.

Bekannt ist ferner, daß sich die Dauergebrauchstemperatur von Lichtwellenleitern verbessern läßt, wenn man den Kern und/oder den Mantel des Lichtwellenleiters nach der Herstellung desselben gegebenenfalls unter dem Einfluß ionisierender Strahlung mit Hilfe von polyfunktionellen Vinylverbindungen oder von glycidylgruppenhaltigen Hilfsstoffen vernetzt (EP-A 171294). Unvollständig umgesetzte Vinylverbindungen können allerdings die Eigenschaften des Lichtwellenleiters bei längerem Gebrauch verschlechtern, während Glycidylgruppen die Wasseraufnahmefähigkeit der Kernmaterialien erhöhen.

Bekannt ist außerdem, daß die Dauergebrauchstemperatur von Lichtwellenleitern, deren Kern oder Mantel aus einem geeigneten Polymeren besteht, durch Behandlung mit ionisierender Strahlung erhöht werden kann (JP 61/35404).

Es ist jedoch schon seit langem bekannt, daß Polymere, die MMA enthalten, sich unter dem Einfluß ionisierender Strahlen gelbbraun verfärben und abgebaut werden. Dadurch wird die Transparenz des Kernmaterials beeinträchtigt und die mechanischen Eigenschaften der Lichtwellenleiter verschlechtern sich.

Desweiteren ist bekannt, daß Quarzglas-Lichtwellenleiter mit Schutzummantelungen aus Polymeren mit ß-Strahlen geringer Energie behandelt wurden mit dem Ziel, diese Polymere zu vernetzen, dabei aber Veränderungen des Glases zu vermeiden, die bei Bestrahlung mit energiereichen ß-Strahlen auftreten (EP-A 145 379) und zu einer geringeren Lichttransmission führen.

Ebenso ist bekannt, daß Schläuche aus fluorhaltigen Polymeren, die VdF, TFE und HFP enthalten und die mit einer klaren transparenten Flüssigkeit gefüllt wurden, als Lichtwellenleiter benutzt werden können (EP-A 246 552).

Schließlich ist bekannt, daß man Polymere, die VdF enthalten, durch Umsetzung des Polymeren mit der Verbindung Dimethylmethoxyvinylsilan und unter Einwirkung von Wasser nach der thermoplastischen Verarbeitung vernetzen kann (DE-A 33 27 596).

Aufgabe war die Bereitstellung eines Verfahrens zur Herstellung eines hochtransparenten Polymermaterials aus leicht zugänglichen Monomeren zur Herstellung des Mantels von Lichtwellenleitern, die für Übertragungslängen von 10 bis 100 Metern geeignet sind und die auch bei einer Temperatur über 100°C ohne wesentliche Einschränkung der Übertragungslänge verwendet werden können.

Es wurde nun gefunden, daß ein Lichtwellenleiter, dessen Mantel aus einer transparenten thermoplastischen Formmasse, welche mit energiereichen geladenen Teilchen bestrahlt und dabei vernetzt wurde, diese Aufgabe zu lösen vermag.

Somit betrifft die Erfindung ein Verfahren zur Herstellung eines Lichtwellenleiters mit Kern/Mantel-Struktur, dessen Kern aus einem Polymer mit einem Brechungsindex n(K) und dessen Mantel aus einem Polymeren mit einem Brechungsindex n(M) besteht, wobei n(K)/n(M) > 1,01 ist, und die Dicke des Mantelmaterials 3 bis 200 µm beträgt, durch Extrusion des Kerns und Umgeben des Kerns mit einem Mantel dadurch gekennzeichnet, daß der Kern aus einem Polycarbonat oder aus einem Polymer extrudiert wird, welches Einheiten enthält, die sich vom Styrol, von einem substituierten Styrol, einem Acrylat, einem Methacrylat oder einen Fluoracrylat ableiten, und mit einem Mantel aus einem Polymer umgeben wird, welches Einheiten enthält, die sich von Siloxanen oder von 1-Olefinen oder, jeweils bezogen auf das Polymer, zu 30 bis 50 Gew.-% vom Vinylidenfluorid, zu 25 bis 55 Gew.-% vom Tetrafluorethylen und zu 15 bis 25 Gew.-% vom Hexafluorpropylen ableiten und der Lichtwellenleiter mit energiereichen Strahlen geladener Elementarteilchen behandelt worden ist, deren Energie nach der Formel (I)

$$\log E = (-A + \log L)/B \qquad (I),$$

ermittelt wurde,
worin
E die Energie der Teilchen in MeV und
L die Dicke des Mantelmaterials in μm
bedeuten,
und A und B empirisch bestimmte Parameter sind, welche von der chemischen Struktur des Mantelmaterials und der verwendeten Teilchenart abhängig sind, wobei A im Bereich von 0,35 bis 1,60 und B im Bereich von 1,30 bis 1,75 liegt.

Der Kern des Lichtwellenleiters besteht aus einem Polycarbonat oder aus einem Polymer, welches Einheiten enthält, die sich vom Styrol, einem substituierten Styrol, einem Acrylat, einem Methacrylat oder einem Fluoracrylat ableiten. Bevorzugt werden solche Polymere verwendet, die einen höheren Glaspunkt als PMMA aufweisen, wodurch die Dauergebrauchstemperatur der Lichtwellenleiter weiter gesteigert werden kann. Dazu gehören Polymere aus α-Fluoracrylsäuremethylester (FA-M), aus α-Fluoracrylsäureestern, Methacrylsäureestern und Acrylsäureestern halogenierter Phenole, mono- und bicyclischer Alkohole und halogenierter offenkettiger, alicyclischer und bicyclischer Alkohole und Copolymere dieser Verbindungen untereinander oder mit MMA, α-Fluoracrylsäurehexafluorisopropylester oder anderen α-Fluoracrylsäureestern und Methacrylsäureestern, die aliphatische oder fluorierte aliphatische Alkoholkomponenten enthalten, sowie Polycarbonate. Besonders bevorzugt werden Polymere, die im wesentlichen aus α-Fluoracrylsäuremethylester, aus α-Fluoracrylsäureestern, Methacrylsäureestern und Acrylsäureestern drei-, vier- und fünffach fluorierter, chlorierter und bromierter Phenole, des 1,4,5,6,7,7-Hexachlor- und Hexabrombicyclo-(2,2.1)-hept-5-en-2-ols, des 1,4,5,6,7-Pentachlor- und des 1,4,5,6-Tetrachlorbicyclo-(2.2.1)-hept-5-en-2-ols; α-Fluoracrylsäure- und Methacrylsäureestern des Cyclohexanols, des 3,3,5-Trimethylcyclohexanols, des 2-Methylcyclopentanols, des Borneols, des Isoborneols, des Norborneols bestehen, und Copolymere dieser Ester mit (Meth)acrylsäureestern aliphatischer Alkohole, sowie Polycarbonat. Besonders bevorzugt sind Polymere, die im wesentlichen aus Acrylsäure- und Methacrylsäurepentachlorphenylester (MA-PCP), Methacrylsäurenorbornylester und aus Methacrylsäure-1,4,5,6,7,7-hexachlorbicyclo-(2.2.1)-hept-5-en-2-ylester bestehen, und Copolymere dieser Ester mit (Meth)acrylsäureestern aliphatischer Alkohole, sowie Polycarbonate.

Der Mantel des Lichtwellenleiters besteht aus einem Polymer, welches Einheiten enthält, die sich von Siloxanen, von 1-Olefinen oder vom Vinylidenfluorid (VdF), vom Tetrafluorethylen (TFE) und vom Hexafluorpropylen (HFP) ableiten. Die Anteile dieser Einheiten am Polymer betragen

VdF 30 bis 50, vorzugsweise 35 bis 45 Gew.-%,
TFE 25 bis 55, vorzugsweise 35 bis 45 Gew.-% und

HFP 15 bis 25, vorzugsweise 17 bis 22 Gew.-%, jeweils bezogen auf die Gesamtmenge des Polymeren. Das siloxanhaltige Mantelpolymer besteht aus einem Polysiloxan, vorzugsweise Poly(dimethylsiloxan). Das 1-olefinhaltige Polymere besteht vorzugsweise aus Ethylen-, Propylen- oder 4-Methylpenteneinheiten, insbesondere 80 bis 60 Gew.-% Ethylen- und 20 bis 40 Gew.-% Propyleneinheiten oder aus 80 bis 100 Gew.-% 4-Methylpenten- und 20 bis 0 Gew.-% anderer 1-Olefineinheiten.

Der Lichtwellenleiter wird nach einem der nachstehenden Verfahren hergestellt:

1. Der Lichtwellenleiter wird durch gleichzeitige Extrusion des Kern- und des Mantelmaterials (Coextrusion) mit Hilfe einer Bikomponentendüse hergestellt.

2. Man stellt zunächst den Kernfaden durch Extrusion her. Danach trägt man das Mantelmaterial entweder in Form einer Mischung des Mantelmaterials mit einem flüchtigen Lösemittel unter Verdampfung des Lösemittels oder durch Extrusion des Mantelmaterials mit Hilfe eines Extruders, der für die Umhüllung von Drähten ausgerüstet wurde, auf. im Falle der Lösemittelbeschichtung kann das Lösemittel entweder geeignet sein zur Herstellung einer homogenen Lösung des Mantelpolymeren oder zur Herstellung einer Dispersion oder einer Emulsion des Mantelpolymeren.

Die Schichtdicke des Mantels des Liehtwellenleiters beträgt 3 bis 200 μm, vorzugsweise 4 bis 150 μm, insbesondere 5 bis 100 μm.

Nach der Herstellung wird der Lichtwellenleiter mit energiereichen Strahlen geladener Elementarteilchen behandelt. Die Energie dieser Strahlen wird auf die Dicke des Mantelmaterials abgestimmt, nach der Formel I

$$\log E = (-A + \log L)/B \qquad (I),$$

worin
E die mittlere Energie in MeV und
L die Dicke der Mantelschicht bedeuten und
A und B empirisch festgelegte Parameter sind, welche abhängig sind von der chemischen Struktur des Mantelmaterials und der Art der verwendeten Teilchen.
A ist 0,35 bis 1,60 und
B ist 1,30 bis 1,75, je nach der chemischen Struktur des Mantelmaterials und der Art der verwendeten Teilchen.

Die geladenen Elementarteilchen sind beispielsweise energiereiche Elektronen, Protonen, Deuteronen (Deuteriumkerne), Heliumkerne, oder Lithiumkerne. Sie werden in Elektronenbeschleunigern oder Ionenbeschleunigern erzeugt, in denen die Elementarteilchen durch elektrische und/oder magnetische Felder beschleunigt werden, oder sie werden aus der ionisierenden Strahlung von α-Strahlen aussendenden radioaktiven Elementen ausgefiltert.

Die Bestrahlung kann, soweit Polysiloxane oder vinylidenfluoridhaltige Fluorpolymere als Mantelmaterial eingesetzt werden, an der Luft erfolgen, wobei die Fenster zwischen der evakuierten Beschleunigungskammer des verwendeten Ionenbeschleunigers und dem Bestrahlungsraum aus dünnen Folien aus Beryllium bestehen. Etwas bessere Ergebnisse wurden mittels eines etwas umständlicheren Verfahrens erzielt, indem der Lichtwellenleiter in einer geschlossenen evakuierten Kammer umgespult und dabei der ionisierenden Strahlung ausgesetzt wurde. Die letztgenannte Verfahrensvariante hat sich auch bei der Bestrahlung von mit Polyolefinen ummantelten Lichtwellenleitern bewährt.

Unabhängig von der Art der verwendeten Strahlung beträgt die Dosis der Strahlung 50 kGY bis 500 kGy, vorzugsweise 100 kGy bis 400 kGY, besonders bevorzugt 150 kGy bis 350 kGy.

Die Energie der zur Bestrahlung verwendeten Elementarteilchen sollte um nicht mehr als 20 %, vorzugsweise nicht mehr 10 % von der mittleren Energie abweichen.

Wird die Energie der Strahlung zu hoch gewählt, so nimmt die Dämpfung des Lichtes zu, Biege- und Reißfestigkeit werden schlechter. Wird der Lichtwellenleiter mit Strahlung einer zu niedrigen Energie behandelt, so nimmt die Dauergebrauchstemperatur ab. Eine zu hohe Strahlendosis verschlechtert die Biegefestigkeit, eine zu niedrige Dosis verschlechtert die Wärmebeständigkeit und, besonders in Lichtwellenleitern mit dicken Mantelschichten, die Reißfestigkeit bei höherer Temperatur. Verwendet man Strahlung uneinheitlicher Energie, so werden sowohl die Lichttransmission als auch die Wärmebeständigkeit und die mechanischen Eigenschaften bei gleicher Dosis schlechter. Verwendet man eine zu niedrige Mantelschichtdicke, so wird die Dämpfung des Lichtes größer, Lichtwellenleiter mit dicken Mantelschichten weisen nach der Vernetzung gute Reißfestigkeiten bei hoher Temperatur auf, die Biegefestigkeit verschlechtert sich jedoch, insbesondere wenn hohe Strahlungsdosen verwendet wurden

Setzt man Copolymere aus VdF, TFE und HFP als Mantelmaterialien in Lichtwellenleitern ein, so setzt sich das Copolymere aus VdF, TFE und HFP im Verhältnis (30 bis 50 %) : (25 bis 55 %) : (15 bis 25 %), vorzugsweise (35 bis 45 %) : (35 bis 45 %) : (17 bis 22 %) zusammen und wird vorzugsweise in Schichtdicken von 4 bis 150 μm, besonders bevorzugt von 6 bis 100 μm verwendet. Die Bestrahlung erfolgt mit energiereichen geladenen Elementarteilchen, deren Energie, ausgedrückt in MeV, um vorzugsweise weniger als 10 % vom Mittelwert abweicht und gemäß der Formel (I) anhand der Parameter A und B auf die Dicke der Mantelschicht, ausgedrückt in

μm, angepaßt wird. Als geladene Teilchen werden Protonen und Heliumkerne bevorzugt, wobei die Parameter A und B in der Formel (I) bei Bestrahlung mit Heliumionen A = 0,35 bis 0,6, vorzugsweise 0,40 bis 0,47 bzw. B = 1,30 bis 1,60, vorzugsweise 1,42 bis 1,50, bei Bestrahlung mit Protonen A = 1,15 bis 1,40, vorzugsweise 1,25 bis 1,35 bzw. B = 1,35 bis 1,75, vorzugsweise 1,52 bis 1,60 betragen.

Besonders bevorzugt wird die Bestrahlung von Lichtwellenleitern mit 6 bis 100 μm dicken Schichten aus solchen Fluorpolymeren, die VdF, TFE und HFP im Verhältnis (35 bis 45 %) : (35 bis 45 %) (17 bis 22 %) enthalten, mit Strahlen energiereicher Protonen, deren Energie nach der Formel (I) gemäß den Parametern A = 1,25 bis 1,35 und B = 1,52 bis 1,60 bemessen wird.

Desweiteren können Lichtwellenleiter aus unterschiedlichen Kernmaterialien und dünnen, 3 bis 150 μm, vorzugsweise 3 bis 100, besonders bevorzugt 6 bis 80 μm starken Schichten aus vernetzbaren amorphen Polyolefinen als Mantel hergestellt werden. Bevorzugt werden amorphe Copolymere aus Ethylen und 1-Olefinen und Homo- und Copolymere des 4-Methylpentens als Mantelmaterialien verwendet. Besonders bevorzugt werden Copolymere aus Ethylen mit Propylen und Poly-4-methylpenten. Die Lichtwellenleiter, die mit diesem Polymeren beschichtet wurden, werden anschließend mit Heliumkernen bestrahlt, deren Energie gemäß Formel (I) anhand der Parameter A und B mit A = 0,35 bis 0,7, vorzugsweise 0,45 bis 0,6 und B = 1,30 bis 1,70, vorzugsweise 1,48 bis 1,62 bemessen wird. Werden Protonen statt Heliumkerne zur Strahlenbehandlung verwendet, so sind die Paramter A = 1,15 bis 1,55, vorzugsweise = 1,30 bis 1,45 und B = 1,30 bis 1,70, vorzugsweise 1,45 bis 1,60.

Weiterhin können Lichtwellenleiter aus unterschiedlichen Kernmaterialien und dünnen, 3 bis 150 μm, vorzugsweise 3 bis 50 μm, besonders bevorzugt 6 bis 30 μm starken Schichten aus Polysiloxanen als Mantel hergestellt werden. Ist das Polysiloxan ein Poly(dimethylsiloxan) (PDMS), so wird der Lichtwellenleiter mit Strahlen energiereicher Heliumkerne einer Energie, die gemäß Formel (I) anhand der Parameter A und B mit A = 0,55 bis 0,8, vorzugsweise 0,65 bis 0,75 und B = 1,00 bis 1,30, vorzugsweise 1,15 bis 1,22 behandelt wird.

Lichtwellenleiter mit PDMS als Mantelmaterial, die ähnliche Eigenschaften ausweisen, entstehen auch, wenn man den Lichtwellenleiter anstatt mit Heliumkernen mit Strahlen energiereicher Protonen behandelt. Die Energie der Protonen wird gemäß Formel (I) anhand der Parameter A und B mit A = 1,30 bis 1,60, vorzugsweise 1,35 bis 1,47 und B = 1,30 bis 1,55, vorzugsweise 1,40 bis 1,45 festgelegt. Die Strahlung wird auf Mantelschichten von 3 bis 150 μm, vorzugsweise 3 bis 50 μm, besonders bevorzugt 6 bis 30 μm Dicke angewendet.

Der mit dem erfindungsgemäßen Verfahren hergestellten Lichtwellenleiter weist eine hervorragende Lichtdurchlässigkeit auf, sofern bei der Herstellung der Polymermaterialien und des Lichtwellenleiters alle partikelartig-festen und löslichen Verunreinigungen sorgfältig entfernt und ausgeschlossen werden. Die Lichtdurchlässigkeit einer solchen Faser wird im allgemeinen durch die zur Lichtdurchlässigkeit reziproke Größe der Dämpfung D gemäß der Formel

$$D = 10 \cdot \log (I/I_0)/l,$$

in der Einheit dB/km ausgedrückt. In der Formel bedeutet I die Intensität des Lichts am Ende des Lichtwellenleiters, $I_0$ die Intensität am Anfang des Lichtwellenleiters, 1 die Länge des Lichtwellenleiters in km.

Ein Lichtwellenleiter mit einem Mantel aus vernetzbarem Material, der erfindungsgemäß mit der oben angegebenen Dosis ionisierender Strahlung geladener Elementarteilchen der angegebenen einheitlichen Energie behandelt wurde, weist zugleich eine sehr niedrige Dämpfung, eine hohe Dauergebrauchstemperatur und gute mechanische Eigenschaften auf, d.h. hält hohen Zugbelastungen stand (hohe Reißfestigkeit) und kann in engen Radien gekrümmt werden (hohe Biegefestigkeit), ohne daß der Lichtwellenleiter bricht oder die Lichtdurchlässigkeit wesentlich abnimmt.

Die Erfindung wird anhand der folgenden Beispiele näher erläutert. Dabei wurde die Dämpfung eines Lichtwellenleiters auf die folgende Art und Weise bestimmt:

In ein Ende eines 10 bis 30 m langen Lichtleitfadens wurde mit Hilfe einer geeigneten Lichtquelle Licht eingekoppelt, während am anderen Ende die Intensität des austretenden Lichts gemessen wurde. Der Lichtleitfaden wurde anschließend jeweils um eine exakt bestimmte Länge von etwa einem Meter gekürzt und die austretende Lichtintensität erneut gemessen. Anhand einer logarithmischen Auftragung der gemessenen Lichtintensitäten gegen die jeweilige Länge des Lichtwellenleiters kann die Dämpfung aus der Steigung bestimmt werden.

Während der Dauer der Messung der Temperaturabhängigkeit der Dämpfung wurden die Verbindungen zwischen Lichtquelle bzw. Lichtdetektor und Lichtwellenleiter nicht verändert, lediglich ein exakt bestimmter Teil des Lichtwellenleiters in einem Klimaschrank im Luftbad auf die Meßtemperatur temperiert. Aus der Abschwächung der Lichtintensität am Ausgang des Lichtwellenleiters und der Länge des temperierten Fadenstücks kann die Änderung der Dämpfung im temperierten Teil des Lichtwellenleiters berechnet werden.

Zur Messung der Flexibilität wurden die Verbindungen zwischen Lichtquelle bzw. Lichtdetektor und dem Lichtwellenleiter nach einer ersten Messung der austretenden Lichtintensität nicht verändert. Ein Teil des Lichtleitfadens in der Mitte der Meßstrecke wurde dreimal um einen zylinderförmigen Stab gewunden, wieder von dem Stab abgewickelt und danach die Intensität des austretenden Lichts gemessen. Hatte die Intensität des Lichts nicht oder nicht wesentlich abgenommen, so wurde der Vorgang an einem Stab eines kleineren Durchmessers wiederholt. Der kleinste Biegeradius, der ohne Verschlechterung der Lichtwellenleiterqualität zugelassen werden kann, ist ein Maß für die Flexibilität des Lichtwellenleiters.

**Beispiel 1**

Zunächst wurde in bekannter Weise ein Copolymeres aus TFE, HFP und VdF in einem Suspensionsverfahren hergestellt. Die wäßrige Flotte enthielt Perfluoroctansäure als Emulgator und Kaliumhydrogensulfat als Puffer. Als Starter diente Ammoniumpersulfat. Polymerisiert wurden 40 Gew.-% TFE, 20 Gew.-% HFP und 40 Gew.-% VdF bei einer Temperatur von 70°C und einem Druck von 9 bar. Als Regler diente Diethylmalonester.

Das Produkt war in Methylethylketon und anderen Lösemitteln löslich. Eine 1-prozentige Lösung in Methylethylketon wies bei 25°C eine reduzierte spezifische Viskosität von 87 cm³/g auf. Mit Hilfe der Gelpermeationschromatographie wurde ein Gewichtsmittelwert der Molmasse von 177 000 gemessen (Tetrahydrofuran als Lösemittel, gemessen an einer Eichkurve von Polystyrol-standardpräparaten). Die Zusammensetzung des Polymeren wurde mittels 19-F-NMR-Spektroskopie zu 40 Gew.-Teilen TFE, 20 Teilen HFP und zu 40 Teilen VdF bestimmt. Der Brechungsindex des Copolymeren betrug $n_D^{25} = 1,366$. In der DSC waren nur sehr geringe kristalline Anteile zu erkennen.

**Beispiel 2**

100 Gew.-Teile Methylmethacrylat wurden durch Destillation und Filtration durch feinporige Membranfilter von Verunreinigungen befreit, mit 0,1 Teilen Dicumylperoxid und 0,3 Teilen Dodecylmerkaptan versetzt und kontinuierlich in einen auf 100° bis 130°C erhitzten Rührkessel eingespeist. In dem Kessel bildete sich aus dem Monomeren eine sirupartig zähe Masse, die aus Monomerem und Polymerem bestand und die kontinuierlich von dem Kessel in einen Doppelschneckenextruder überführt wurde. Im Doppelschneckenextruder erhöhte sich der Polymeranteil durch fortgesetzte Polymerisation bei 120° bis 170°C auf 80 bis 100 % Umsatz. Überschüssiges freies Monomeres wurde in der Entgasungszone des Extruders im Vakuum abgezogen. Das entstandene Polymere war frei von flüchtigen Bestandteilen und wies einen mittleren Polymerisationsgrad (Gewichtsmittelwert) $P_w = 1100$ auf.

Ein Copolymeres aus VdF, TFE und HFP wurde nach Beispiel 1 hergestellt und in einem Einschneckenextruder aufgeschmolzen. In einer Bikomponenten-Spinndüse wurde das PMMA (mittlerer Polymerisationsgrad $P_w$ = 1100) zum Kern, das VdF-Copolymere zum Mantel eines Lichtwellenleiters verarbeitet. Die Arbeitsparameter der Spinnanlage wurden so eingestellt, daß ein Faden von 1 mm Durchmesser mit einer Schichtdicke des Mantelmaterials von 10 μm entstand.

Der Lichtwellenleiter wies bei Zimmertemperatur eine Dämpfung von 250 dB/km bei 650 nm auf. Die Dämpfung stieg bei 70°C geringfügig auf einen Wert von 280 dB/km und nahm erst bei noch höheren Temperaturen stärker zu. Der Wert der Dämpfung blieb unverändert, wenn man den Lichtwellenleiter um einen Stab mit dem Durchmesser 10 mm wand. Die Reißfestigkeit des Fadens betrug bei 25°C 10 cN/tex.

Ein 400 m langes Stück dieses Lichtwellenleiters wurde anschließend in eine evakuierte Kammer überführt und über ein Rollensystem sechsmal so vor dem Austrittstrichter eines Elektronenbeschleunigers hin- und hergeführt, daß er möglichst gleichmäßig von allen Seiten einer Strahlung mit der Energie 600 keV in einer Dosis von 200 kGy ausgesetzt wurde.

Der bestrahlte Lichtwellenleiter wies bei Zimmertemperatur eine Dämpfung von 260 dB/km bei 650 nm auf. Die Dämpfung stieg bei 120°C geringfügig auf einen Wert von 320 dB/km und nahm erst bei noch höheren Temperaturen stärker zu. Der Wert der Dämpfung blieb unverändert, wenn man den Lichtwellenleiter um einen Stab mit einem Durchmesser von 10 mm wand. Die Reißfestigkeit des Fadens betrug bei 25°C 10 cN/tex, bei 120°C 2 cN/tex.

**Beispiel 3**

Ein Lichtwellenleiter wurde nach den Angaben in Beispiel 2 hergestellt und im Vakuum allseitig gleichmäßig mit 200 kGy energiereicher Heliumkerne von 2,4 MeV aus einem Ionenbeschleuniger bestrahlt.

Der bestrahlte Lichtwellenleiter wies eine Dämpfung von 280 dB/km bei 650 nm auf. Die Dämpfung blieb bis zu einer Temperatur von 70°C konstant, stieg bei höheren Temperaturen auf 350 dB/km bei 110°C und 650 nm an. Wurde der Lichtwellenleiter wieder abgekühlt, so fielen die Dämpfungswerte wieder auf die Ausgangswerte zurück. Die Dämpfung erhöhte sich nicht, wenn der Lichtwellenleiter um einen Stab mit einem Durchmesser von 10 mm gewunden wurde. Die Reißfestigkeit betrug 10 cN/tex bei 25°C, 1,5 cN/tex bei 100°C.

**Beispiel 4**

Ein Lichtwellenleiter wurde nach den Angaben in Beispiel 2 hergestellt und im Vakuum allseitig gleichmäßig mit 200 kGy energiereicher Protonen von 630 keV aus einem Ionenbeschleuniger bestrahlt.

Der bestrahlte Lichtwellenleiter wies eine Dämpfung von 240 dB/km bei 650 nm auf. Die Dämpfung blieb bis zu einer Temperatur von 70°C konstant, stieg bei höheren Temperaturen auf 300 dB/km bei 110°C und 650 nm an. Wurde der Lichtwellenleiter wieder abgekühlt, so fielen die Dämpfungswerte wieder auf die Ausgangswerte zurück. Die Dämpfung erhöhte sich nicht, wenn der Lichtwellenleiter um einen Stab mit einem Durchmesser von 10 mm gewunden wurde. Die Reißfestigkeit betrug 10 cN/tex bei 25°C, 1,5 cN/tex bei 100°C.

**Beispiel 5**

Ein Lichtwellenleiter wurde in der Art und Weise wie in Beispiel 2 hergestellt mit dem Unterschied, daß die Arbeitsparameter der Extrusionsapparatur so eingestellt wurden, daß die Schichtdicke des Mantelmaterials 100 μm betrug. Er wurde sodann im Vakuum allseitig gleichmäßig mit 200 kGy energiereicher Protonen von 2,8 MeV aus einem Ionenbeschleuniger bestrahlt.

Der bestrahlte Lichtwellenleiter wies eine Dämpfung von 290 dB/km bei 650 nm auf. Die Dämpfung blieb bis zu einer Temperatur von 70°C annähernd konstant, stieg bei höheren Temperaturen auf 340 dB/km bei 110°C und 650 nm an. Wurde der Lichtwellenleiter wieder abgekühlt, so fielen die Dämpfungswerte wieder auf die Ausgangswerte zurück. Die Dämpfung erhöhte sich nicht, wenn der Lichtwellenleiter um einen Stab mit einem Durchmesser von 25 mm gewunden wurde. Die Reißfestigkeit betrug 10 cN/tex bei 25°C, 2 cN/tex bei 120°C.

**Vergleichsbeispiel A**

Ein Lichtwellenleiter wurde wie in Beispiel 2 hergestellt mit dem Unterschied, daß die Schichtdicke des Mantelmaterials 100 μm betrug. Er wurde im Vakuum allseitig gleichmäßig mit 200 kGy energiereicher Protonen von 4,3 MeV aus einem Ionenbeschleuniger bestrahlt.

Der bestrahlte Lichtwellenleiter wies eine Dämpfung von 900 dB/km bei 650 nm auf.

**Vergleichsbeispiel B**

Ein Lichtwellenleiter wurde wie in Beispiel 2 hergestellt mit dem Unterschied, daß die Schichtdicke des Mantelmaterials 30 μm betrug. Er wurde im Vakuum allseitig gleichmäßig mit 200 kGy energiereicher Protonen von 1,0 MeV aus einem Ionenbeschleuniger bestrahlt.

Der bestrahlte Lichtwellenleiter wies eine Dämpfung von 240 dB/km bei 650 nm auf. Die Dämpfung stieg bis zu einer Temperatur von 70°C auf 280 dB/km bei 650 nm, bis 120°C auf 1500 dB/km an. Wurde der Lichtwellenleiter wieder abgekühlt, so fielen die Dämpfungswerte nicht unter 1000 dB/km.

**Vergleichsbeispiel C**

Ein Lichtwellenleiter der nach den Angaben in Beispiel 2 hergestellt worden war, wurde im Vakuum allseitig gleichmäßig mit 200 kGy energiereicher Protonen von 630 keV aus einem Ionenbeschleuniger bestrahlt.

Der bestrahlte Lichtwellenleiter wies eine Dämpfung von 280 dB/km bei 650 nm auf. Die Dämpfung stieg auf 1300 dB/km, wenn der Lichtwellenleiter um einen Stab mit einem Durchmesser von 15 mm gewunden wurde.

**Beispiel 6**

In einer Bikomponenten-Spinndüse wurde PMMA (mittlerer Polymerisationsgrad $P_w$ = 1100) zum Kern, Polydimethylsiloxan zum Mantel eines Lichtwellenleiters verarbeitet. Die Arbeitsparameter der Spinnanlage wurden so eingestellt, daß ein Faden von 1 mm Durchmesser entstand, dessen Mantelschicht 10 µm dick war.

Der Lichtwellenleiter wurde direkt nach Verlassen der Extrusionsanlage über ein Rollensystem sechsmal in einem Abstand von wenigen Millimetern so vor je einem von sechs mit einer dünnen, 2 µm starken Berylliumfolie bedeckten länglichen Fenster eines Ionenbeschleunigers in Längsrichtung der Fenster hin- und hergeführt, daß er möglichst gleichmäßig von allen Seiten einer Strahlung von Protonen der Energie 850 keV in einer Dosis von 200 kGy ausgesetzt wurde.

Der bestrahlte Lichtwellenleiter wies bei Zimmertemperatur eine Dämpfung von 360 dB/km bei 650 nm auf. Die Dämpfung stieg bei 120°C geringfügig auf einen Wert von 440 dB/km und nahm erst bei noch höherer Temperatur stärker zu. Der Wert der Dämpfung blieb unverändert, wenn man den Lichtwellenleiter um einen Stab mit einem Durchmesser von 5 mm wand. Die Reißfestigkeit des Fadens betrug bei 25°C 8 cN/tex, bei 120°C 1,5 cN/tex.

**Beispiel 7**

Acrylsäurepentachlorphenylester wurde durch wiederholtes Umkristallisieren aus Toluol gereinigt, wobei die Toluollösung vor der letzten Kristallisation des Acrylsäureesters durch Filtration über ein feinporiges Membranfilter von partikelartigen Verunreinigungen befreit wurde.

17 Gew.-Teile MMA, 83 Gew.-Teile A-PCP, 0,1 Gew.-Teile tert.-Butylperoxid und 0,3 Gew.-Teile Dodecylmerkaptan wurden bei 90°C zu einem teils festen, teils flüssigen Brei verrührt und bei dieser Temperatur kontinuierlich in einem Rührkessel eingespeist, der auf eine Arbeitstemperatur von 130°C eingestellt wurde. Das klare, sirupartig zähe Gemisch aus Monomeren und Polymeren wurde kontinuierlich in einen Doppelschneckenentgasungsextruder eingespeist, bei 130° bis 180°C weiter polymerisiert und in einer Entgasungszone im Vakuum von überschüssigen Monomeren befreit. Das Polymere war frei von flüchtigen Bestandteilen und wies einen mittleren Polymerisationsgrad $P_w$ von 900 auf. Die Glasübergangstemperatur des Copolymeren lag bei 150°C (gemessen mittels DSC), der Brechungsindex bei 1,57.

Entsprechend Beispiel 2 wurde aus diesem Copolymeren und dem Copolymeren aus VdF, TFE und HFP nach Beispiel 1 kontinuierlich ein Lichtwellenleiter hergestellt, wobei die Arbeitsparameter der Bikomponenten-Spinnanlage so eingestellt wurden, daß ein Lichtwellenleiter von 0,5 mm Durchmesser mit einer Schichtdicke des Mantelmaterials von 10 µm entstand. Der Lichtwellenleiter wurde mit 200 kGY Elektronenstrahlung von 600 keV behandelt.

Der so hergestellte Lichtwellenleiter wies bei 25°C eine Lichtdämpfung von 1230 dB/km, bei 70°C von 1290 dB/km, bei 150°C von 1350 dB/km bei 650 nm auf. Bei noch höherer Temperatur stieg die Dämpfung rasch auf Werte über 2000 dB/km, gemessen bei 180°C an, fiel jedoch wieder auf 1400 dB/km bei 120°C und 1250 dB/km bei 25°C ab.

Der Lichtwellenleiter wies eine Reißfestigkeit von 5 cN/tex bei 25°C bzw. von 4 cN/tex bei 110°C auf und konnte ohne einen Verlust an Lichtdurchlässigkeit um einen runden Stab mit einem Durchmesser von 25 mm gewunden werden.

**Beispiel 8**

Polycarbonat (Glasübergangstemperatur 145°C) wurde mittels eines Doppelschneckenentgasungsextruders aufgeschmolzen und als Kern zusammen mit dem Mantelmaterial, einem Copolymeren aus VdF, TFE und HFP (im Gewichtsverhältnis 43: 38: 19), in einer Bikomponentendüse zu einem Lichtwellenleiter verarbeitet.

Der Lichtwellenleiter hatte einen Durchmesser von 0,5 mm, der Mantel eine Schichtdicke von 10 µm. Er wurde mit 200 kGY Elektronenstrahlung mit einer Energie von 600 keV behandelt.

Der Lichtwellenleiter wies eine Lichtdämpfung von 980 dB/km bei 25° C, von 1030 dB/km bei 130°C und 650 nm auf. Die Lichtdämpfung stieg zwar beim weiteren Erwärmen auf 150°C auf über 2000 dB/km an, nach dem Abkühlen wurden die Ausgangswerte jedoch nahezu wieder erreicht (1020 dB/km bei 25°C).

Der Lichtwellenleiter wies eine Reißfestigkeit von 6 cN/tex bei 25°C und von 4 cN/tex bei 120°C auf und konnte ohne einen Verlust an Lichtdurchlässigkeit um einen runden Stab mit einem Durchmesser von 12 mm gewunden werden.

**Beispiel 9**

Polycarbonat wurde mittels eines Doppelschneckenentgasungsextruders aufgeschmolzen und als Kern zusammen mit dem Mantelmaterial Poly-4-methylpenten in einer Bikomponentendüse zu einem Lichtwellenleiter verarbeitet.

Der Lichtwellenleiter hatte einen Durchmesser von 0,5 mm, der Mantel eine Schichtdicken von 10 µm. Er wurde mit 200 kGy Protonenstrahlung mit einer Energie von 550 keV behandelt.

Der Lichtwellenleiter wies eine Dämpfung von 950 dB/km bis 25°, von 1080 dB/km bei 130°C und 650 nm auf. Die Lichtdämpfung stieg zwar beim Erwärmen auf 160°C auf über 2000 dB/km an, nach dem Abkühlen wurden die Ausgangswerte jedoch nahezu wieder erreicht (970 dB/km bei 25°C).

**Beispiel 10**

In der Art und Weise, die im Beispiel 2 angegeben wurde, wurde ein Lichtwellenleiter hergestellt, wobei anstelle der angegebenen Mischung aus MMA, Dicumylperoxid und Dodecylmerkaptan ein Gemisch aus 30 Gew.-Teilen MMA, 62 Gew.-Teilen Methacrylsäurenorbornylester und 1 Gew.-Teil Acrylsäuremethylester sowie 0,1 Gew.-Teilen tert.-Butylperoxid und 0,3 Gew.-Teilen Dodecylmerkaptan dem Rührkessel bei einer Polymerisationstemperatur von 130°C zugeführt wurde. Das in einem Extruder mit Entgasungszone polymerisierte und von flüchtigen Bestandteilen befreite Produkt wies einen Polymerisationsgrad $P_w$ von 850 auf. Die Glasübergangstemperatur wurde mit Hilfe der DSC-Methode zu 151°C bestimmt.

Der Lichtwellenleiter wies einen Durchmesser von 0,5 mm, der Mantel eine Schichtdicke von 10 µm auf. Der Lichtwellenleiter wurde mit 200 kGy Elektronenstrahlung von 600 keV behandelt.

Der Lichtwellenleiter zeigte eine Lichtdämpfung von 710 dB/km bei 25°C, von 780 dB/km bei 100°C und 650 nm. Die Lichtdämpfung stieg zwar beim weiteren Erwärmen auf 150°C auf über 2000 dB/km an, nach dem Abkühlen wurden die Ausgangswerte jedoch nahezu wieder erreicht (750 dB/km bei 25°C).

Der Lichtwellenleiter wies eine Reißfestigkeit von 6 cN/tex bei 25°C bzw. von 3 cN/tex bei 110°C auf und konnte ohne einen Verlust an Lichtdurchlässigkeit um einen runden Stab mit einem Durchmesser von 25 mm gewunden werden.

**Patentansprüche**

1. Verfahren zur Herstellung eines Lichtwellenleiters mit Kern/Mantel-Struktur, dessen Kern aus einem Polymer mit einem Brechungsindex n(K) und dessen Mantel aus einem Polymer mit einem Brechungsindex n(M) besteht, wobei n(K)/n(M) > 1,01 ist und die Dicke des Mantelmaterials 3 bis 200 µm beträgt, durch Extrusion des Kerns und Umgeben des Kerns mit einem Mantel, dadurch gekennzeichnet, daß der Kern aus einem Polycarbonat oder aus einem Polymer extrudiert wird, welches Einheiten enthält, die sich vom Styrol, von einem substituierten Styrol, einem Acrylat, einem Methacrylat oder einem Flouracrylat ableiten, und mit einem Mantel aus einem Polymer umgeben wird, welches Einheiten enthält, die sich von Siloxanen oder von 1-Olefinen oder, jeweils bezogen auf das Polymer, zu

30-50 Gew.-% vom Vinylidenfluorid, zu
25-55 Gew.-% vom Tetrafluorethylen und zu
15-25 Gew.-% vom Hexafluorpropylen ableiten

und daß der Lichtwellenleiter mit energiereichen Strahlen geladener Elementarteilchen behandelt wird, deren Energie nach der Formel (I)

$$\log E = (-A + \log L) / B \qquad (I),$$

ermittelt wurde, worin
E die Energie der Teilchen in MeV und
L die Dicke des Mantelmaterials in µm bedeuten, und A und B empirisch bestimmte Parameter sind, welche von der chemischen Struktur des Mantelmaterials und der verwendeten Teilchenart abhängig sind, wobei
A im Bereich von 0,35 bis 1,60 und B im Bereich von 1,30 bis 1,75 liegt.

2. Verfahren nach Anspruch 1, dadurch gekennzeichnet, daß Kern und Mantel durch Coextrusion gleichzeitig hergestellt werden.

3. Verfahren nach Anspruch 1, dadurch gekennzeichnet, daß die Bestrahlung mit energiereichen Elektronen, Protonen, Deuteronen, Heliumkernen oder Kernen anderer leichter Elemente vorgenommen wird.

4. Verfahren nach Anspruch 1, dadurch gekennzeichnet, daß die mittlere Abweichung der Energie der zur Bestrahlung verwendeten Elementarteilchen von der mittleren Energie weniger als 20% beträgt.

**Claims**

1. A process for the production of an optical waveguide having a core/sheath structure, whose core comprises a polymer with a refractive n(C) and whose sheath comprises a polymer with a refractive index n(S), where n(C)/n(S) > 1.01 and the thickness of the sheath material is 3 to 200 µm, by extruding the core and encasing the core with a sheath, which comprises extruding the core from a polycarbonate or from a polymer which contains units which are derived from styrene, from a substituted styrene, from an acrylate, from a methacrylate or from a fluoroacrylate, and encasing it by a sheath made from a polymer which contains units which are derived from siloxanes or from 1-olefins or, based in each case on the polymer, from
30 - 50% by weight of vinylidene fluoride,
25 - 55% by weight of tetrafluoroethylene and
15 - 25% by weight of hexafluoropropylene,
and which comprises treating the optical waveguide with high energy rays of charged primary particles, whose energy has been determined from the formula (I)

$$\log E = (-A + \log L)/B \qquad (I)$$

in which
E is the energy of the particles in MeV and
L is the thickness of the sheath material in $\mu$m, and A and B are empirically determined parameters which are dependent on the chemical structure of the sheath material and the type of particle used, A being in the range from 0.35 to 1.60 and B being in the range from 1.30 to 1.75.

2. The process as claimed in claim 1, wherein the core and the sheath are produced simultaneously by coextrusion.

3. The process as claimed in claim 1, wherein the irradiation is carried out with high energy electrons, protons, deuterons, helium nuclei or nuclei of other light elements.

4. The process as claimed in claim 1, wherein the mean deviation of the energy of the primary particles used for the irradiation is less than 20% of the mean energy.

**Revendications**

1. Procédé pour préparer un guide d'ondes lumineuses avec une structure noyau/gaine, dont le noyau est constitué d'un polymère ayant un indice de réfraction n(K) et dont la gaine est constituée d'un polymère ayant un indice de réfraction n(M), où n(K)/n(M) >1,01 et l'épaisseur de la matière de la gaine est de 3 à 200 $\mu$m, par extrusion du noyau et en enveloppant le noyau d'une gaine, caractérisé en ce que le noyau est préparé par extrusion d'un polycarbonate ou d'un polymère qui comporte des motifs qui dérivent du styrène, d'un styrène substitué, d'un acrylate, d'un méthacrylate ou d'un fluoroacrylate, et qui est gainé d'une gaine en polymère qui comporte des motifs qui dérivent de siloxanes ou de 1-oléfines ou, chaque fois rapporté au polymère,
de 30 à 50 % en poids de fluorure de vinylidène,
de 25 à 55 % en poids de tétrafluoroéthylène et
de 15 à 25 % en poids d'hexafluoropropylène,
et le guide d'ondes lumineuses est irradié par des rayons de particules élementaires chargées de haute énergie, dont l'énergie est déterminée par la formule (I)

$$\log E = (-A + \log L)/B \qquad (I),$$

où
E représente l'énergie des particules en MeV et
L représente l'épaisseur de la matière de gaine en $\mu$m,
et A et B sont des paramètres déterminés de façon empirique qui dépendent de la structure chimique de la matière de la gaine et du type de particules utilisées, A étant dans le domaine de 0,35 à 1,60 et B étant dans le domaine de 1,30 à 1,75.

2. Procédé selon la revendication 1, caractérisé en ce que le noyau et la gaine sont préparés en même temps par coextrusion.

3. Procédé selon la revendication 1, caractérisé en ce que l'irradiation est effectuée par des électrons, des protons, des deutérons, des noyaux d'hélium ou des noyaux d'autres éléments légers de haute énergie.

4. Procédé selon la revendication 1, caractérisé en ce que l'écart moyen de l'energie des particules élémentaires utilisées pour l'irradiation soit inférieur à 20 % de l'énergie moyenne.